# EUROPEAN PATENT SPECIFICATION

(11) **EP 2 399 804 B1**
(45) Date of publication and mention of the grant of the patent: **27.05.2015**
(21) Application number: 10167149.3
(22) Date of filing: 24.06.2010
(51) Int. Cl.: B62D 21/14, B62D 21/12

(54) **Transportation body sub-frame**
Fahrzeugrahmen
Faux-châssis de caisse de transport

(43) Date of publication of application: 28.12.2011
(73) Proprietor: AUTOKAROSS I FLOBY AB, 521 51 Floby (SE)
(72) Inventor: Eriksson, Karl-Uno, 521 91, FALKÖPING (SE); Rehn, Patrik, 521 52, FLOBY (SE); Johansson, Henrik, 541 40, SKÖVDE (SE)
(74) Representative: Willquist, Sofia Ellinor

(56) References cited:
- FR-A1- 2 474 989
- FR-A1- 2 853 296
- FR-A1- 2 920 399
- US-B1- 6 199 894

## Description

### Technical field

The present invention refers to a sub-frame for a transportation body adapted to be attached to the body frame of a transportation vehicle.

### Background

Sub-frames are used in a well-known manner to build a transportation body of a transportation vehicle. The transportation body could be a truck bed or a box body. The sub-frame is adapted to be attached to the body frame of the transportation vehicle. The sub-frame structure must therefore correspond to the structure of the body frame, such that the girders of the sub-frame are attached to the girders of the body frame.

A sub-frame may consist of a number of longitudinal girders and a number of transversal girders, such as in US4000924. The longitudinal and transversal girders must be located in certain longitudinal and transversal positions to fit a certain vehicle model. Transportation vehicles of different models may have different distances between the attachment points between the longitudinal and transversal girders of the sub-frame, and the girders of the body frame. A manufacturer of sub-frames and transportation bodies may manufacture sub-frames for a plurality of different transportation vehicle models. The number of parts, such as different longitudinal and transversal girders, becomes very large in order to be able to provide sub-frames that fit a plurality of transportation vehicle models. A large number of parts become very costly for the sub-frame manufacturer.

Ways to overcome the problem with the inflexibility with fixed sized sub frames are presented in FR2474989, FR2853296 and FR2920399, where the girders are slidably variable in size. However, by making a sub frame larger, it may be required to readjust any load bearing beams, which may be a time consuming consequence.

Consequently, there is a need for a more cost-effective solution for providing sub-frames that fit a plurality of transportation vehicle models.

### Summary

In view of the above, it is an objective to solve or at least reduce the problems discussed above. In particular, it is an objective to provide a sub-frame system that cost-effectively may form sub-frames that fit a plurality of transportation vehicle models.

This is achieved by providing a sub-frame system for forming a sub-frame for a transportation body for a transportation vehicle, wherein said system comprises a longitudinal member of a first longitudinal length, adapted to extend in a longitudinal direction of a sub-frame, and a first transversal member adapted to extend in a transversal direction of a sub-frame, and adapted to be attached to the longitudinal member at an attachment location. The longitudinal member and the first transversal member are arranged such that the attachment location between the longitudinal member and the first transversal member is adjustable in both the longitudinal direction and the transversal direction of the sub-frame, wherein the first transversal member is provided with at least one opening through which opening the longitudinal member is adapted to extend.

By being able to adjust the attachment location between the longitudinal member and the first transversal member, different sub-frame structures may be formed that fits different transportation vehicle models. This may be useful since a body frame of a transportation vehicle typically is provided with attachment holes at predetermined positions for receiving a sub-frame. For different vehicle models the distances between the holes may be different, thereby requiring different structure of the sub-frames. These requirements may be different distance between two longitudinal members in the sub-frame, or different attachment locations of transversal members along the longitudinal extension of the sub-frame. By providing an adjustable attachment location between the longitudinal member and the first transversal member, the two members may be moved relative to each other in both the longitudinal and the transversal direction of the sub-frame, such that the sub-frame may fit a certain vehicle model.

In prior art, different longitudinal and transversal members are needed for every different requirement of the transportation vehicle models. Such system to form sub-frames for many vehicle models may thereby need to include a very large number of parts. A specific longitudinal member and a specific transversal member for each vehicle model to meet the requirements on attachment locations for that vehicle model may thereby be required, which may become very costly. In a system according to the invention, an adjustable attachment location between a longitudinal member and a first transversal member may be achieved, in both the longitudinal direction and the transversal direction of the sub-frame, with the same longitudinal member and first transversal member.

An attachment location between a longitudinal member and a first transversal member may be a position where the two members cross each other and are adapted to be attached to each other. A transportation body may comprise a sub-frame with an add-on such as a truck bed, a box body or the like. The longitudinal member may be adapted to extend in the longitudinal direction of the sub-frame. When the sub-frame is arranged on a transportation vehicle, the longitudinal direction of the sub-frame may be a direction substantially in parallel with a driving direction of the vehicle. The transversal direction of the sub-frame may be a direction that is substantially perpendicular to the longitudinal direction of the sub-frame. The longitudinal member may be longer than the first transversal member, such that a sub-frame may be formed with a substantially rectangular shape. The longitudinal member and the first transversal member may be provided as girders, preferably made of steel.

By providing the first transversal member with at least one opening through which the longitudinal member may be adapted to extend, the longitudinal member may extend through the first transversal member, instead of attaching the longitudinal member on top of the first transversal member, or the other way around. A lower height of the sub-frame may thereby be provided. This may further provide a lower height of the transportation body attached to the body frame of the transportation vehicle. Further, this may provide a lower height of the transportation vehicle without a reduced space in the transportation body. At least one attachment hole in the first transversal member may be arranged in connection with the opening such that the longitudinal member may be attached to the first transversal member. The first transversal member may further be provided with more than one opening, such that more than one longitudinal member may extend through the first transversal member. The plurality of openings may be located at different positions along the first transversal member's extension in the transversal direction of the sub-frame. Preferably, the first transversal member may be provided with two openings, such that two longitudinal members may extend through the first transversal member.

In one embodiment, the longitudinal member and the first transversal member may be arranged such that the attachment location being adjustable may be provided by the longitudinal member providing a plurality of possible attachment positions between the first transversal member and the longitudinal member in the longitudinal direction of the sub-frame. Thereby the first transversal member may be adjustable in its longitudinal position to fit to an attachment point on a body frame of the transportation vehicle. In a sub-frame formed by a longitudinal member and a plurality of first transversal members, the longitudinal member may for each first transversal member provide a plurality of possible attachment positions for that first transversal member and the longitudinal member.

In a further embodiment, the first transversal member may be provided with at least one attachment hole, and the longitudinal member may be provided with at least one oblong slot to provide the adjustable attachment location as a plurality of possible attachment positions between the first transversal member and the longitudinal member in the longitudinal direction of the sub-frame, such that an attachment means may be adapted to extend through an attachment hole and an oblong slot to attach the first transversal member to the longitudinal member. An attachment means extending through the attachment hole in the first transversal member and through the oblong slot in the longitudinal member may thereby attach the first transversal member to the longitudinal member at a plurality of different positions. An oblong slot may provide a stepless adjustment of the attachment location by the attachment means within the extension of the oblong slot. The oblong slot may extend in parallel with the longitudinal extension of the longitudinal member in the longitudinal direction of the sub-frame. The longitudinal member may be provided with a plurality of oblong slots, thereby providing a plurality of possible attachment positions, steplessly within each oblong slot. The attachment means may be a screw, bolt, rivet or any other common attachment means.

In another embodiment, the first transversal member and the longitudinal member may be arranged such that the attachment location being adjustable may be provided by the first transversal member providing a plurality of possible attachment positions between the longitudinal member and the first transversal member in the transversal direction of the sub-frame. Thereby the longitudinal member may be adjustable in its transversal position to fit to an attachment point on a body frame of the transportation vehicle. In a sub-frame formed with a first transversal member and a plurality of longitudinal members, the first transversal member may for each longitudinal member provide a plurality of possible attachment positions for that longitudinal member and the first transversal member.

In a further embodiment, the longitudinal member may be provided with at least one attachment hole, and the first transversal member may be provided with a plurality of attachment holes to provide the adjustable attachment position as a plurality of possible attachment positions between the first transversal member and the longitudinal member in the transversal direction of the sub-frame, such that an attachment means may be adapted to extend through an attachment hole of the longitudinal member and an attachment hole of the first transversal member to attach the longitudinal member to the first transversal member. When forming the sub-frame, the longitudinal member may be attached to the first transversal member at a plurality of different attachment positions in the transversal direction of the sub-frame. Thereby, the longitudinal member may be attached to a certain position on the first transversal member in the transversal direction of the sub-frame required by the structure of the body frame of the transportation vehicle. The attachment means may be a screw, bolt, rivet or any other common attachment means.

In a yet further embodiment, the attachment hole in the longitudinal member may be provided as an oblong slot. Thereby, the first transversal member may be attachable to the longitudinal member at a plurality of different positions in the longitudinal direction of the sub-frame, at the same time as the longitudinal member is attachable to the first transversal member at a plurality of different positions in the transversal direction of the sub-frame. Thereby, the attachment location adjustable in both the longitudinal and transversal direction of the sub-frame may be provided. An attachment means may extend through one of the plurality of attachment holes in the first transversal member to specify the attachment location of the longitudinal member to the first transversal member in the transversal direction of the sub-frame, and the attachment means further may extend through the oblong slot in the longitudinal member to specify the attachment location of the first transversal member to the longitudinal member in the longitudinal direction of the sub-frame.

In one embodiment, the sub-frame system may further comprise a longitudinal extension member adapted to be attached to the longitudinal member to extend the longitudinal length of the sub-frame. Thereby, the longitudinal member with a specified first longitudinal length, and the longitudinal extension member with a specified longitudinal length may together provide the possibility of forming different longitudinal lengths of a sub-frame. Different transportation vehicle models may require different longitudinal lengths of the sub-frame. In prior art, each vehicle model may need a separate longitudinal member, providing costly manufacturing for the sub-frame manufacturer. With a sub-frame system according to the invention, with a longitudinal member and a longitudinal extension member that may be attached to each other to provide different longitudinal lengths of the sub-frame, a more cost-effective manufacturing may be provided.

In a further embodiment, the longitudinal member and the longitudinal extension member may be arranged to provide a plurality of possible attachment positions between the longitudinal member and the longitudinal extension member, such that when the longitudinal member and the longitudinal extension member are attached to each other, a plurality of possible longitudinal lengths of the sub-frame may be provided. Thereby, the total length of the longitudinal member together with the longitudinal extension member may be adjustable. The longitudinal member and the longitudinal extension member may be attached to each other at a number of different attachment positions, such that the total length may be different at the different attachment positions.

In another embodiment, the longitudinal member may comprise an attachment hole and the longitudinal extension member may comprise at least one oblong slot, or the longitudinal extension member may comprise an attachment hole and the longitudinal member may comprise at least one oblong slot, such that a plurality of possible attachment positions, with an attachment means adapted to extend through the attachment hole and the oblong slot, may be provided when the longitudinal member is attached to the longitudinal extension member. An attachment means extending through the attachment hole in one of the members and through the oblong slot in the other one of the members may thereby attach the longitudinal member to the longitudinal extension member at a plurality of different positions. An oblong slot may provide a stepless adjustment of the attachment position by the attachment means within the extension of the oblong slot. The oblong slot may extend in parallel with the longitudinal extension of the longitudinal member or the longitudinal extension member, in the longitudinal direction of the sub-frame. The longitudinal member or the longitudinal extension member may be provided with a plurality of oblong slots, thereby providing a plurality of possible attachment positions, steplessly within each oblong slot. The plurality of possible attachment positions may be provided such that a telescopic arrangement may be provided between the longitudinal member and the longitudinal extension member. The attachment means may be a screw, bolt, rivet or any other common attachment means. The attachment hole in one of the member may be provided as an oblong slot, such that both members may be provided with oblong slots.

In one embodiment, the sub-frame system may further comprise two long-side members adapted to extend along the longitudinal direction of the sub-frame, and to be attached to opposite ends of the first transversal member, and wherein the attachment position between a long-side member and the first transversal member may be steplessly variable in the longitudinal direction of the sub-frame. The first transversal member may thereby not be dependent on any certain attachment position to the long-side member, when an attachment location between the first transversal member and a longitudinal member is adjusted. The system may comprise a plurality of first transversal members. The long-side members may thereby each be attached to all first transversal members in the sub-frame. The first transversal member may be attached to a long-side member by means of an attachment means, such as a rivet. The rivet may expand in an opening in the long-side member.

In another embodiment, the first transversal member may be adapted to extend below the longitudinal member in a direction towards a body frame of the transportation vehicle when formed to a sub-frame, such that the first transversal member may be adapted to be attached to the body frame of the transportation vehicle. When the first transversal member extends below the longitudinal member towards the body frame, there may be a gap between the body frame and the longitudinal member when the sub-frame is mounted on the body frame. Thereby, it may be possible to lift the sub-frame onto the body frame by means of a fork-lift or the like. In prior art, the longitudinal member in a sub-frame typically is attached directly to the body frame of the transportation vehicle. It is in that case not possible to lift the sub-frame onto the body frame by means of a fork-lift. Instead a more complicated procedure is necessary, such as using a crane.

In one embodiment, the sub-frame system may further comprise a longitudinal member of a second longitudinal length, adapted to be attached to a first transversal member, to form a sub-frame. When providing longitudinal members of different lengths in the sub-frame system, sub-frames may be formed that fits a larger number of transportation vehicle models. A certain vehicle model may require a certain length on the longitudinal member. The longitudinal member of a second longitudinal length may further be attached to a longitudinal extension member, in the same way as the longitudinal member of a first longitudinal length. Thereby, a system comprising a plurality of longitudinal members of different lengths may provide the possibility to form sub-frames in a wide range of longitudinal lengths.

In another embodiment, the sub-frame system may further comprise a second transversal member, providing a plurality of possible attachment positions between the longitudinal member and a second transversal member, said attachment positions may differ from the plurality of possible attachment positions between the longitudinal member and a first transversal member. Different transportation vehicle models may have certain requirements on the position of the longitudinal member in the transversal direction of the sub-frame. This may affect the attachment location between the longitudinal member and the transversal member. By providing a system comprising a plurality of transversal members, providing different attachment positions between the transversal member and a longitudinal member in the transversal direction of the sub-frame, fewer parts may be needed to provide the possibility to form sub-frames that fit a large number of vehicle models, than if a specific transversal member would be needed for each different requirement for vehicle models. A more cost-effective system compared to prior art may then be provided. The first transversal member and the second transversal member may each provide a plurality of different possible attachment positions. The attachment positions provided by the first transversal member may at least substantially differ from the attachment positions provided by the second transversal member. The second transversal member may be provided with the same features as the first transversal member, such as relating to attachment positions, attachment holes, opening, attachment to a long-side member or otherwise as stated above. The system may comprise even further types of transversal member, providing yet different attachment positions.

In a second aspect of the invention, a sub-frame for a transportation body to a transportation vehicle is provided, wherein the sub-frame is formed from the sub-frame system according to any one of the claims 1-14, such that the sub-frame is formed by at least two longitudinal members, and at least four first or second transversal members. Thereby, a sub-frame may be formed that fits a certain transportation vehicle model, wherein the sub-frame is formed from the system in a cost-effective way. The sub-frame may further be formed comprising at least two longitudinal extension members and two long-side members. A sub-frame may thereby be formed with a longitudinal extension that is longer than the longitudinal member used to form the sub-frame. Instead of providing a longitudinal member of a certain length for each vehicle model, the longitudinal length of the sub-frame is extended with a longitudinal extension member to form the sub-frame.

### Brief description of the drawings

The invention will in the following be described in more detail with reference to the enclosed drawings, wherein:
Fig. 1 shows a perspective view of a sub-frame according to an embodiment of the invention.
Fig. 2 shows a perspective view of a sub-frame and a box body according to an embodiment of the invention.
Fig. 3 shows a perspective view of a part of a sub-frame according to an embodiment of the invention.
Fig. 4 shows a schematic side view in cross-section of a long-side member according to an embodiment of the invention.

### Detailed description of embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

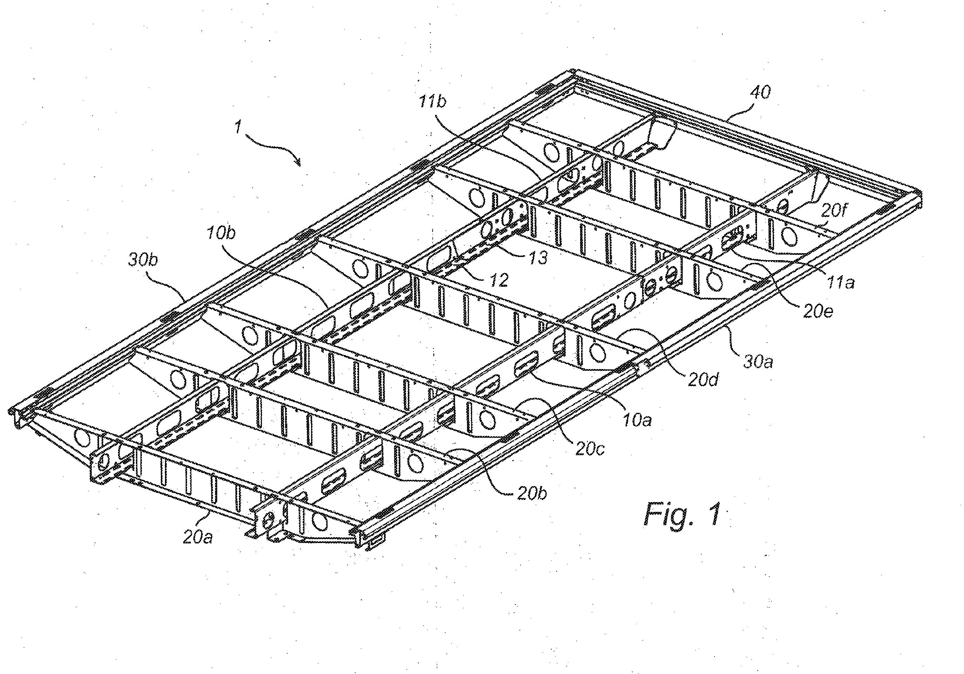

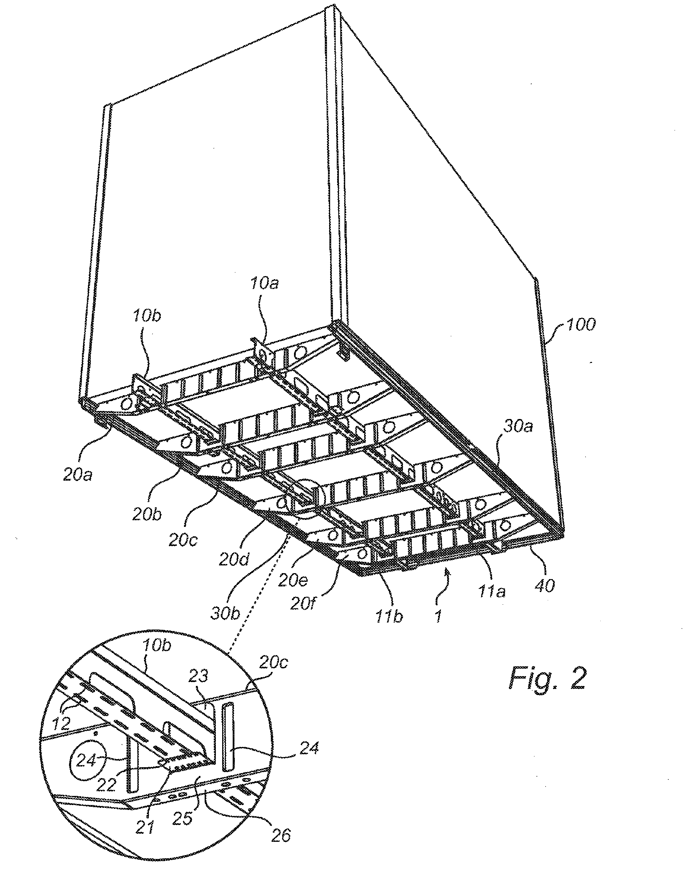

Fig. 1 and 2 describes a sub-frame 1 according to an embodiment of the invention. To the sub-frame 1, there is attached a box body 100 for providing a transportation body to a transportation vehicle. The box body 100 provides a loading compartment to the transportation vehicle when the transportation body is attached to the body frame of the transportation vehicle.

The sub-frame 1 comprises two longitudinal members 10a, 10b of a first longitudinal length provided as longitudinal girders 10a, 10b, preferably made of steel. The longitudinal members 10a, 10b may in another embodiment be provided as girders, bars or the like of any other for the purpose suitable material. The longitudinal girders 10a, 10b extends in the longitudinal direction of the sub-frame 1. The extension of the longitudinal girders 10a, 10b is extended by two longitudinal extension girders 11 a, 11b that are attached to the longitudinal girders 10a, 10b. The longitudinal extension girder 11 a is arranged to the longitudinal girder 10a such that the longitudinal extension girder 11 a is telescopically movable relative to the longitudinal girder 10a. Thereby the longitudinal length of the sub-frame 1 can be adjusted to fit a certain transportation vehicle model using the same longitudinal girder 10a and longitudinal extension girder 11 a. The longitudinal girder 10a and the longitudinal extension girder 11 a may together form a longitudinal length for the sub-frame 1 that may vary between a shortest length equivalent to the length of the longitudinal girder 10a, and a longest length equivalent to the length of the longitudinal girder 10a plus the length of the longitudinal extension girder 11a, minus the overlap between the two girders 10a, 11 a needed for attaching them to each other. If a longer longitudinal length of the sub-frame is needed, a longer longitudinal girder and/or a longer longitudinal extension girder should be used. If a shorter longitudinal length of the sub-frame is needed, a shorter longitudinal girder and/or a shorter longitudinal extension girder should be used.

The longitudinal girder 10a and the longitudinal extension girder 11 a are both provided with oblong slots 12, 13 extending in parallel with the longitudinal direction of the sub-frame 1. An attachment means (not shown) is adapted to extend through an oblong slot of the longitudinal girder 10a and an oblong slot of the longitudinal extension girder 11 a such that the two girders are attached to each other. The plurality of oblong slots 12, 13 provide a plurality of possible attachment positions between the longitudinal girder 10a and the longitudinal extension girder 11a. Within an oblong slot 12, 13, a plurality of possible attachment positions is provided by a steplessly adjustable position of an attachment means. The oblong slots 12, 13 on each of the longitudinal girder 10a and the longitudinal extension girder 11 a are provided in two longitudinal rows. The oblong slots 12, 13 in the two rows overlap each other in their longitudinal extension. The attachment between the longitudinal girder 10a and the longitudinal extension girder 11 a thereby becomes possible to adjust steplessly throughout the extension of the two girders 10a, 11 a when an attachment means extends through an oblong slot 12 of the longitudinal girder 10a and an oblong slot 13 of the longitudinal extension girder 11 a. The attachment means thereby attaches the longitudinal girder 10a and the longitudinal extension girder 11a to each other such that a certain longitudinal length of the sub-frame 1 is achieved. The longitudinal girder 10b and longitudinal extension girder 11 b are arranged similar to the described arrangement with the longitudinal girder 10a and the longitudinal extension girder 11 a.

The sub-frame 1 further comprises six transversal members 20a-f provided as cross bars 20a-f, preferably made of steel. The transversal members 20a-f may in another embodiment be provided as girders, bars or the like made of steel or any other for the purpose suitable material. Each cross bar 20a-f is provided with two openings 23 through which openings 23 a longitudinal girder 10a, 10b or a longitudinal extension girder 11 a, 11 b is arranged to extend. In figure 2, an attachment location between a longitudinal girder 10b and a cross bar 20c is shown. The attachment location is adjustable in both the transversal and longitudinal direction of the sub-frame 1.

At a lower end of the opening 23 in the cross bar 20c, an attachment plate 21 is arranged. The attachment plate 21 is provided with twelve attachment holes 22 in two rows. The longitudinal girder 10b is provided with two rows of oblong slots 12. The twelve attachment holes 22 in the attachment plate 21 is arranged to provide three possible attachment positions between the longitudinal girder 10b and the cross bar 20c in the transversal direction, via the attachment plate 21. Four attachment holes 22 on the attachment plate 21 are provided for each attachment position, such that attachment means (not shown) are adapted to extend through the attachment holes 22 and the oblong slots 12 to attach the longitudinal girder 10b and the cross bar 20c to each other. Four attachment means can thereby be used to attach the longitudinal girder 10b and the cross bar 20c at a certain attachment position.

The oblong slots 12 on the longitudinal girder 10b further provides a plurality of possible attachment position between the longitudinal girder 10b and the cross bar 20c in the longitudinal direction of the sub-frame 1. An attachment means can extend through one of the oblong slots 12 and through one of the attachment holes 22 in the attachment plate 21. Within the oblong slot 12, the attachment means is steplessly movable for the attachment between the longitudinal girder 10b and the cross bar 20c. The two rows of oblong slots 12 are placed to overlap each other in the longitudinal direction. Thereby, if only two attachment means are used to attach the longitudinal girder 10b and the cross bar 20c to each other instead of four, a steplessly variable attachment location is provided in the longitudinal direction throughout the longitudinal extension of the longitudinal girder 10b. The attachment holes 22 in the attachment plate 22 on the cross bar 20c and the oblong slots 12 on the longitudinal girder 10b together provides a plurality of attachment positions between the longitudinal girder 10b and the cross bar 20c both in the longitudinal direction and the transversal direction of the sub-frame 1.

Each attachment location between a longitudinal girder 10a, 10b or a longitudinal extension girder 11 a, 11 b and a cross bar 20a-f is provided with the same features as the described attachment location between longitudinal girder 10b and cross bar 20c. By changing the attachment position of the longitudinal girder 10a, 10b and/or longitudinal extension girder 11 a, 11 b to the attachment plate 21 of each cross bar 20a-f, the positions of the longitudinal girders 10a, 10b and/or longitudinal extension girders 11 a, 11 b in the transversal direction of the sub-frame 1 can be adjusted to fit a certain transportation vehicle model. By changing the attachment positions of the cross bars 20a-f to the longitudinal girders 10a, 10b and longitudinal extension girders 11 a, 11 b, positions of the cross bars 20a-f in the longitudinal direction of the sub-frame 1 can be adjusted to fit a certain transportation vehicle.

Below the openings 23 in the cross bars 20a-f, there are distance parts 25 providing a distance between a bottom surface 26 of the cross bars 20a-f and the longitudinal girders 10a, 10b extending through the openings 23. The bottom surfaces 26 of the cross bars 20a-f are adapted to abut a body frame of the transportation vehicle to which the sub-frame 1 is intended to be attached to. A distance is thereby provided between the body frame and the longitudinal girders 10a, 10b. This provides the possibility to lift the sub-frame 1 or transportation body including the sub-frame 1 onto the body frame by means of a fork lift, since the fork lift may reach in under the longitudinal girders 10a, 10b from the long-side of the transportation body.

The cross bars 20a-f are provided with protruding ribs 24 to increase the strength and stability of the cross bars 20a-f. The ribs 24 extend on a side surface of the cross bars 20a-f, in a direction perpendicular to an extension plane of the sub-frame 1.

The sub-frame 1 further comprises two long-side members 30a, 30b provided as long-side profiles 30a, 30b, and a short-side member 40 provided as a short-side profile 40. The long-side profiles 30a, 30b are attached to the cross bars 20a-f, at end portions of the cross bars 20a-f in the transversal direction of the sub-frame 1. The short-side profile 40 is attached to the ends of the longitudinal extension girders 11 a, 11 b at a longitudinal end of the sub-frame. The long-side profiles 30a, 30b and the short-side profile 40 thereby provide a further stability in the sub-frame 1. The long-side profiles 30a, 30b are attached to the short-side profile 40 at two corner locations of the sub-frame 1. The sub-frame 1 may, in a further embodiment, comprise an additional short-side profile attached to opposite longitudinal ends of the longitudinal girders 10a, 10b or longitudinal extension girders 11 a, 11 b than the short-side profile 40. The long-side profiles 30a, 30b, the short-side profile 40 and the additional short-side profile then together form a rectangular frame around the sub-frame 1.

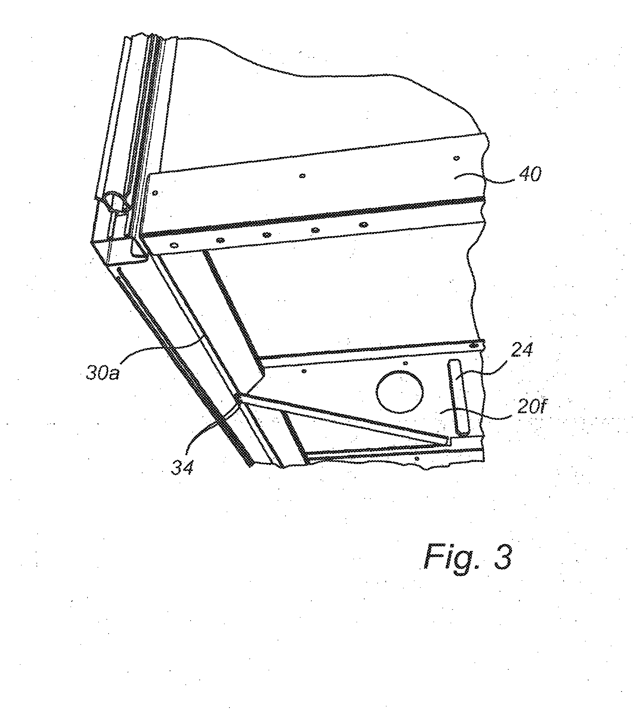

Fig 3 describes the attachment between the cross bar 20f and the long-side profile 30a. The long-side profile 30a provides an attachment position between the long-side profile 30a and the cross bar 20f that is steplessly variable in the longitudinal direction of the sub-frame 1. The attachment of both ends of each cross bar 20a-f to a long-side profile 30a, 30b are similar to the described attachment of cross bar 20f to long-side profile 30a.

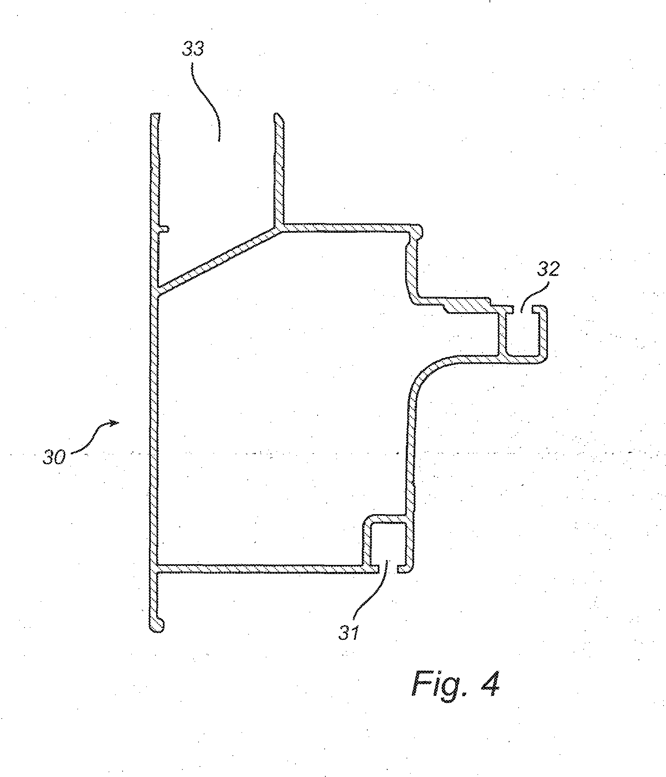

Fig 4 describes the profile of a long-side profile 30. The long-side profile 30 is provided with two cavities 31, 32 adapted to face a cross bar 20a-f. The cavities 31, 32 extend along the longitudinal extension of the long-side profile 30 in the longitudinal direction of the sub-frame 1. When a cross bar 20a-f is to be attached to the long-side profile 30, an attachment means 34, preferably provided as a rivet, extends through an attachment hole at the end portion of the cross bar 20a-f and into a cavity 31, 32. When the rivet is expanded in the cavity 31, 32, the cross bar 20a-f is attached to the long-side profile 30. The long-side profile 30 further comprises a wall cavity 33 for receiving a wall portion of the box body 100 arranged on top of the sub-frame 1.

## Claims

1. A sub-frame system for forming a sub-frame (1) for a transportation body for a transportation vehicle, said system comprising,
a longitudinal member (10) of a first longitudinal length, adapted to extend in a longitudinal direction of a sub-frame,
a first transversal member (20a) adapted to extend in a transversal direction of a sub-frame, and adapted to be attached to the longitudinal member (10) at an attachment location, wherein the longitudinal member (10) and the first transversal member (20a) are arranged such that the attachment location between the longitudinal member (10) and the first transversal member (20a) is adjustable in both the longitudinal direction and the transversal direction of the sub-frame, **characterized in that**
the first transversal member (20a) is provided with at least one opening (23) through which opening the longitudinal member (10) is adapted to extend.

2. Sub-frame system according to claim 1, wherein the longitudinal member (10) and the first transversal member (20a) are arranged such that the attachment location being adjustable is provided by the longitudinal member (10) providing a plurality of possible attachment positions between the first transversal member (20a) and the longitudinal member (10) in the longitudinal direction of the sub-frame (1).

3. Sub-frame system according to claim 1 or 2, wherein the first transversal member (10) is provided with at least one attachment hole (22), and the longitudinal member is provided with at least one oblong slot (12) to provide the adjustable attachment location as a plurality of possible attachment positions between the first transversal member (20a) and the longitudinal member (10) in the longitudinal direction of the sub-frame (1), such that an attachment means is adapted to extend through an attachment hole (22) and an oblong slot (12)to attach the first transversal member (20a) to the longitudinal member (10).

4. Sub-frame system according to any one of the preceding claims, wherein the first transversal member (20a) and the longitudinal member (10) are arranged such that the attachment location being adjustable is provided by the first transversal member (20a) providing a plurality of possible attachment positions between the longitudinal member (10) and the first transversal member (20a) in the transversal direction of the sub-frame (1).

5. Sub-frame system according to any one of the preceding claims, wherein the longitudinal member (10) is provided with at least one attachment hole (12), and the first transversal member is provided with a plurality of attachment holes (22) to provide the adjustable attachment location as a plurality of possible attachment positions between the first transversal member (20a) and the longitudinal member in the transversal direction of the sub-frame (1), such that an attachment means is adapted to extend through an attachment hole of the longitudinal member and an attachment hole of the first transversal member to attach the longitudinal member to the transversal member.

6. Sub-frame system according to claim 5, wherein said attachment hole in the longitudinal member is provided as an oblong slot (12).

7. Sub-frame system according to any one of the preceding claims, wherein the system further comprises a longitudinal extension member adapted to be attached to the longitudinal member to extend the longitudinal length of the sub-frame.

8. Sub-frame system according claim 7, wherein the longitudinal member (10) and the longitudinal extension member (11) are arranged to provide a plurality of possible attachment positions between the longitudinal member (10) and the longitudinal extension member (11), such that when the longitudinal member (10) and the longitudinal extension member (11) are attached to each other, a plurality of possible longitudinal lengths of the sub-frame is provided.

9. Sub-frame system according to any one of the preceding claims, wherein the longitudinal member (10) comprises an attachment hole and the longitudinal extension member (11) comprises an oblong slot (13), or
the longitudinal extension member (11) comprises an attachment hole and the longitudinal member comprises an oblong slot (12),
such that a plurality of possible attachment positions with an attachment means, adapted to extend through the attachment hole and the oblong slot, is provided the longitudinal member (10) is attached to the longitudinal extension member (11).

10. Sub-frame system according to any one of the preceding claims, wherein the system further comprises two long-side members (30a-b) adapted to extend along the longitudinal direction of the sub-frame (1), and to be attached to opposite ends of the first transversal member (20a), and wherein the attachment position between a long-side member (30) and the first transversal member (20a) is steplessly variable in the longitudinal direction of the sub-frame (1).

11. Sub-frame system according to any one of the preceding claims, wherein the first transversal member (20a) is adapted to extend below the longitudinal member (10) in a direction towards a body frame of the transportation vehicle when formed to a sub-frame (1), such that the first transversal member (20)a is adapted to be attached to the body frame of the transportation vehicle.

12. Sub-frame system according to any one of the preceding claims, wherein the system further comprises a longitudinal member (10) of a second longitudinal length, adapted to be attached to a first transversal member (20a), to form a sub-frame.

13. Sub-frame system according to claim 4, wherein the system further comprises a second transversal member (20b-f), providing a plurality of possible attachment positions between the longitudinal member (10) and a second transversal member(20b-f), said attachment positions differs from the plurality of possible attachment positions between the longitudinal member (10) and a first transversal member (20a).

14. A sub-frame for a transportation body to a transportation vehicle, formed from the sub-frame system according to any one of the claims 1-13, such that the sub-frame is formed by at least two longitudinal members (10), and at least four first or second transversal members (20a-f).

## Patentansprüche

1. Hilfsrahmensystem zum Formen eines Hilfsrahmens (1) für einen Transportaufbau für ein Transportfahrzeug, wobei das System Folgendes umfasst:
einen Längsträger (10) mit einer ersten Längslänge, dafür eingerichtet, sich in einer Längsrichtung eines Hilfsrahmens zu erstrecken,
einen ersten Querträger (20a), dafür eingerichtet, sich in einer Querrichtung eines Hilfsrahmens zu erstrecken, und dafür eingerichtet, an einer Befestigungsstelle an dem Längsträger (10) befestigt zu werden, wobei der Längsträger (10) und der erste Querträger (20a) derart angeordnet sind, dass die Befestigungsstelle zwischen dem Längsträger (10) und dem ersten Querträger (20a) sowohl in der Längsrichtung als auch in der Querrichtung des Hilfsrahmens einstellbar ist, **dadurch gekennzeichnet, dass**
der erste Querträger (20a) mit wenigstens einer Öffnung (23) versehen ist, wobei der Längsträger (10) dafür eingerichtet ist, sich durch die Öffnung zu erstrecken.

2. Hilfsrahmensystem nach Anspruch 1, wobei der Längsträger (10) und der erste Querträger (20a) derart angeordnet sind, dass die Einstellbarkeit der Befestigungsstelle dadurch gewährleistet wird, dass der Längsträger (10) mehrere mögliche Befestigungspositionen zwischen dem ersten Querträger (20a) und dem Längsträger (10) in der Längsrichtung des Hilfsrahmens (1) bereitstellt.

3. Hilfsrahmensystem nach Anspruch 1 oder 2, wobei der erste Querträger (20a) mit wenigstens einem Befestigungsloch (22) versehen ist und der Längsträger mit wenigstens einem länglichen Schlitz (12) versehen ist, um die einstellbare Befestigungsstelle als mehrere mögliche Befestigungspositionen zwischen dem ersten Querträger (20a) und dem Längsträger (10) in der Längsrichtung des Hilfsrahmens (1) bereitzustellen derart, dass ein Befestigungsmittel dafür eingerichtet ist, sich durch ein Befestigungsloch (229 und einen länglichen Schlitz (12) zu erstrecken, um den ersten Querträger (20a) an dem Längsträger (10) zu befestigen.

4. Hilfsrahmensystem nach einem der vorhergehenden Ansprüche, wobei der erste Querträger (20a) und der Längsträger (10) derart angeordnet sind, dass die Einstellbarkeit der Befestigungsstelle dadurch gewährleistet wird, dass der erste Querträger (20a) mehrere mögliche Befestigungspositionen zwischen dem Längsträger (10) und dem ersten Querträger (20a) in der Längsrichtung des Hilfsrahmens (1) bereitstellt.

5. Hilfsrahmensystem nach einem der vorhergehenden Ansprüche, wobei der Längsträger (10) mit wenigstens einem Befestigungsloch (12) versehen ist und der erste Querträger (20a) mit mehreren Befestigungslöchern (22) versehen ist, um die einstellbare Befestigungsstelle als mehrere mögliche Befestigungspositionen zwischen dem ersten Querträger (20a) und dem Längsträger in der Querrichtung des Hilfsrahmens (1) bereitzustellen derart, dass ein Befestigungsmittel dafür eingerichtet ist, sich durch ein Befestigungskoch des Längsträgers und ein Befestigungsloch des ersten Querträgers zu erstrecken, um den Längsträger an dem ersten Querträger zu befestigen.

6. Hilfsrahmensystem nach Anspruch 5, wobei in dem Längsträger als ein länglicher Schlitz (12) bereitgestellt wird.

7. Hilfsrahmensystem nach einem der vorhergehenden Ansprüche, wobei das System ferner ein Längserweiterungselement umfasst, dafür eingerichtet, an dem Längsträger befestigt zu werden, um die Längslänge des Hilfsrahmens zu erweitern.

8. Hilfsrahmensystem nach Anspruch 7, wobei der Längsträger (10) und das Längserweiterungselement (11) dafür angeordnet sind, mehrere mögliche Befestigungspositionen zwischen dem Längsträger (10) und dem Längserweiterungselement (11) bereitzustellen derart, dass, wenn der Längsträger (10) und das Längserweiterungselement (11) aneinander befestigt werden, mehrere mögliche Längslängen des Hilfsrahmens bereitgestellt werden.

9. Hilfsrahmensystem nach einem der vorhergehenden Ansprüche, wobei der Längsträger (10) ein Befestigungsloch umfasst und das Längserweiterungselement (11) einen länglichen Schlitz (13) umfasst oder
das Längserweiterungselement (11) ein Befestigungsloch umfasst und der Längsträger einen länglichen Schlitz (12) umfasst derart,
dass mehrere mögliche Befestigungspositionen mit einem Befestigungsmittel, dafür eingerichtet, sich durch das Befestigungsloch und den länglichen Schlitz zu erstrecken, bereitgestellt werden, wenn der Längsträger (10) an dem Längserweiterungselement (11) befestigt wird.

10. Hilfsrahmensystem nach einem der vorhergehenden Ansprüche, wobei das System ferner zwei Längsseitenträger (30a-b), dafür eingerichtet, sich entlang der Längsrichtung des Hilfsrahmens (1) zu erstrecken, und zu befestigen an entgegengesetzten Enden des ersten Querträgers (20a), umfasst und wobei die Befestigungsposition zwischen einem Längsseitenträger (30) und dem ersten Querträger (20a) in der Längsrichtung des Hilfsrahmens (1) stufenlos veränderlich ist.

11. Hilfsrahmensystem nach einem der vorhergehenden Ansprüche, wobei der erste Querträger (20a) dafür eingerichtet ist, sich unterhalb des Längsträgers (10) in einer Richtung, zu einem Aufbaurahmen des Transportfahrzeugs hin, zu erstrecken, wenn es zu einem Hilfsrahmen (1) geformt ist derart, dass der erste Querträger (20a) dafür eingerichtet ist, an dem Aufbaurahmen des Transportfahrzeugs befestigt zu werden.

12. Hilfsrahmensystem nach einem der vorhergehenden Ansprüche, wobei das System ferner einen Längsträger (10) mit einer zweiten Längslänge, dafür eingerichtet, an einem ersten Querträger (20a) befestigt zu werden, um einen Hilfsrahmen zu formen, umfasst.

13. Hilfsrahmensystem nach Anspruch 4, wobei das System ferner einen zweiten Querträger (20b-f) umfasst, der mehrere mögliche Befestigungspositionen zwischen dem Längsträger (10) und einem zweiten Querträger (20b-f) bereitstellt, wobei sich die Befestigungspositionen von den mehreren möglichen Befestigungspositionen zwischen dem Längsträger (10) und einem ersten Querträger (20a) unterscheiden.

14. Hilfsrahmen für einen Transportaufbau für ein Transportfahrzeug, geformt aus dem Hilfsrahmensystem nach einem der Ansprüche 1 bis 13 derart, dass der Hilfsrahmen durch wenigstens zwei Längsträger (10) und wenigstens vier erste oder zweite Querträger (20a-f) geformt wird.

## Revendications

1. Système de faux-châssis pour former un faux-châssis (1) pour un caisse de transport pour un véhicule de transport, ledit système comprenant :
un élément longitudinal (10) d'une première longueur longitudinale, adapté pour s'étendre dans une direction longitudinale d'un faux-châssis,
un premier élément transversal (20a) adapté pour s'étendre dans une direction transversale d'un faux-châssis et adapté pour être fixé à l'élément longitudinal (10) à un emplacement de fixation, dans lequel l'élément longitudinal (10) et le premier élément transversal (20a) sont disposés de telle manière que l'emplacement de fixation entre l'élément longitudinal (10) et le premier élément transversal (20a) peut être réglé à la fois dans la direction longitudinale et dans la direction transversale du faux-châssis, **caractérisé en ce que**
le premier élément transversal (20a) est muni d'au moins une ouverture (23), ouverture à travers laquelle l'élément longitudinal (10) est adapté pour s'étendre.

2. Système de faux-châssis selon la revendication 1 dans lequel l'élément longitudinal (10) et le premier élément transversal (20a) sont disposés de telle manière que l'emplacement de fixation étant réglable est assuré par l'élément longitudinal (10) offrant ainsi une pluralité de positions de fixation possibles entre le premier élément transversal (20a) et l'élément longitudinal (10) dans la direction longitudinale du faux-châssis (1).

3. Système de faux-châssis selon la revendication 1 ou 2 dans lequel le premier élément transversal (10) est muni d'au moins un trou de fixation (22) et l'élément longitudinal est muni d'au moins une fente oblongue (12) pour fournir l'emplacement de fixation réglable sous la forme d'une pluralité de positions de fixation possibles entre le premier élément transversal (20a) et l'élément longitudinal (10) dans la direction longitudinale du faux-châssis (1), de telle sorte qu'un moyen de fixation est adapté pour s'étendre à travers un trou de fixation (22) et une fente oblongue (12) pour fixer le premier élément transversal (20a) à l'élément longitudinal (10).

4. Système de faux-châssis selon l'une quelconque des revendications précédentes dans lequel le premier élément transversal (20a) et l'élément longitudinal (10) sont disposés de telle sorte que l'emplacement de fixation étant réglable est fourni par le premier élement transversal (20a) offrant ainsi une pluralité de positions de fixation possibles entre l'élément longitudinal (10) et le premier élément transversal (20a) dans la direction transersale du faux-châssis (1).

5. Système de faux-châssis selon l'une quelconque des revendications précédentes dans lequel l'élément longitudinal (10) est muni d'au moins un trou de fixation (12) et le premier élement transversal est muni d'une pluralité de trous de fixation (22) pour fournir l'emplacement de fixation réglable sous la forme d'une pluralité de positions de fixation possibles entre le premier élement transversal (20a) et l'élément longitudinal dans la direction transversale du faux-châssis (1) de telle manière qu'un moyen de fixation est adapté pour s'étendre à travers un trou de fixation de l'élément longitudinal et un trou de fixation du premier élément transversal pour fixer l'élément longitudinal à l'élément transversal.

6. Système de faux-châssis selon la revendication 5 dans lequel ledit trou de fixation dans l'élément longitudinal est aménagé sous la fome d'une fente oblongue (12).

7. Système de faux-châssis selon l'une quelconque des revendications précédentes dans lequel le système comprend en plus un élément d'extension longitudinal adapté pour être fixé à l'élément longitudinal pour étendre la longueur longitudinale du faux-châssis.

8. Système de faux-châssis selon la revendication 7 dans lequel l'élément longitudinal (10) et l'élément d'extension longitudinal (11) sont disposés pour fournir une pluralité de positions de fixation possibles entre l'élément longitudinal (10) et l'élément d'extension longitudinal (11) de telle sorte qu'une une pluralité de longueurs longitudinales possibles du faux-châssis est ainsi créée, lorsque l'élément longitudinal (10) et l'élément d'extension longitudinal (11) sont fixés l'un à l'autre.

9. Système de faux-châssis selon l'une quelconque des revendications précédentes dans lequel l'élément longitudinal (10) comprend un trou de fixation et l'élément d'extension longitudinal (11) comprend une fente oblongue (13) ou
l'élément d'extension longitudinal (11) comprend un trou de fixation et l'élément longitudinal comprend une fente oblongue (12),
de telle sorte qu'une pluralité de positions de fixation possibles avec un moyen de fixation, adapté pour s'étendre à travers le trou de fixation et la fente oblongue, est créée, l'élément longitudinal (10) étant fixé à l'élément d'extension longitudinal (11).

10. Système de faux-châssis selon l'une quelconque des revendications précédentes dans lequel le système comprend en plus deux éléments à côté long (30a-b) adaptés pour s'étendre le long de la direction longitudinale du faux-châssis (1) et pour être fixés aux extrémités opposées du premier élément transversal (20a) et dans lequel la position de fixation entre un élément à côté long (30) et le premier élément transversal (20a) est variable de façon continue dans la direction longitudinale du faux-châssis (1).

11. Système de faux-châssis selon l'une quelconque des revendications précédentes dans lequel le premier élément transversal (20a) est adapté pour s'étendre sous l'élément longitudinal (10) dans une direction vers un châssis de caisse du véhicule de transport lorsqu'il est formé en un faux-châssis (1) de telle sorte que le premier élément transversal (20a) est adapté pour être fixé au châssis de caisse du véhicule de transport.

12. Système de faux-châssis selon l'une quelconque des revendications précédentes dans lequel le système comprend en plus un élément longitudinal (10) d'une deuxième longueur longitudinale, adapté pour être fixé à un premier élément transversal (20a) pour former un faux-châssis.

13. Système de faux-châssis selon la revendication 4 dans lequel le système comprend en plus un deuxième élément transversal (20b-f), offrant une pluralité de positions de fixation possibles entre l'élément longitudinal (10) et un deuxième élément transversal (20b-f), lesdites positions de fixation diffèrant de la pluralité de positions de fixation possibles entre l'élément longitudinal (10) et un premier élément transversal (20a).

14. Faux-châssis pour une caisse de transport pour un véhicule de transport, formé à partir du système de faux-châssis selon l'une quelconque des revendications 1-13 de telle sorte que le faux-châssis est formé par au moins deux éléments longitudinaux (10) et au moins quatre premiers ou deuxièmes éléments transversaux (20a-f).
